# EUROPEAN PATENT APPLICATION

(11) **EP 1 179 554 A1**
(43) Date of publication of application: **13.02.2002**
(21) Application number: 00306743.6
(22) Date of filing: 08.08.2000
(51) Int. Cl.: C08F 210/02, C08F 232/00, C08F 4/642, C07F 17/00

(54) **Catalyst composition for preparing olefin polymers**

(71) Applicant: INDUSTRIAL TECHNOLOGY RESEARCH INSTITUTE, Chutung, Hsinchu 31015 (TW)
(72) Inventor: Tsai, Jing-Cheng, Kaohsiung City (TW); Wu, Ming-Yuan, Tsao-Ten Chen, Nantou Hsien (TW); Hsieh, Tung-Ying, Li-Hsing Li, Chung-Ho City, Taipei (TW); Wei, Yuh-Yuan, Pao-Shan Hsiang, Hinschu Hsien (TW)
(74) Representative: Nash, David Allan

(57) **Abstract**

A catalyst composition which can be used for preparing olefin polymers. The obtained olefin polymer has high cycloolefin conversion and a high glass transition temperature. In addition, the catalyst composition can still maintain relatively high activity at high temperature reaction conditions.

A catalyst composition for preparing an olefin polymer, comprising:
(a) a metallocene compound represented by the formula (I); 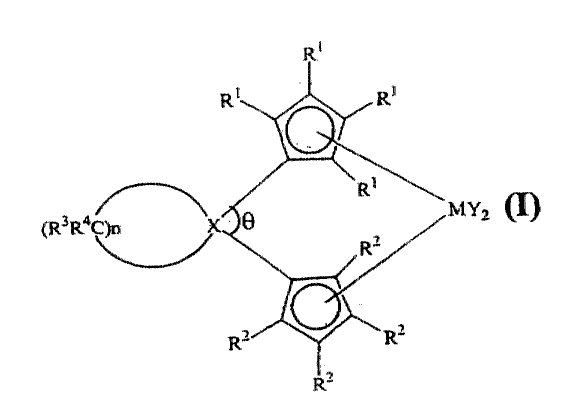 wherein
   R¹ can be the same or different and is selected from the group consisting of hydrogen, halogen, an alkyl, alkenyl, aryl, alkylaryl or arylalkyl group having from 1 to 20 carbon atoms, or two adjacent R¹ groups can join together to form, with the carbon atoms to which they are attached, a saturated or unsaturated ring system having from 4 to 20 carbon atoms;
   R² can be the same or different and has the same definition as R¹;
   X is selected from the group consisting of carbon, silicon, germanium and tin;
   n is from 2 to 12;
   R³ and R⁴ can be the same or different and are selected from the group consisting of hydrogen, halogen, an alkyl, alkenyl, aryl, alkylaryl or arylalkyl group having from 1 to 20 carbon atoms;
   M is a Group IVB transition metal with an oxidation state of +4; and
   Y is the same or different and is independently an anionic ligand with a -1 valence; and
(b) an activating cocatalyst selected from the group consisting of (1) an aluminoxane, (2) a mixture of A1R¹¹R¹²R¹³ and a borate, and (3) a mixture of A1R¹¹R¹²R¹³ and an aluminoxane, wherein R¹¹, R¹², and R¹³ are a C₁₋₂₀ aliphatic group or a C₆₋₁₀ aromatic group.

## Description

### BACKGROUND OF THE INVENTION

### 1. Field of the Invention:

The present invention relates to a catalyst composition for preparing olefin polymers, and more particularly to a catalyst composition for preparing cycloolefin copolymers with a high cycloolefin conversion and a high glass transition temperature. The catalyst composition can still maintain relatively high activity at high temperature reaction conditions.

### 2. Description of the Prior Art:

Olefin-based polymers have been used in a wide range of applications. One group of commonly used olefin-based polymers is polyolefins, that is, homopolymers or copolymers of olefins. These polyolefin polymers are typically used in such applications as blow and injection molding, extrusion coating, film and sheeting, pipe, wire and cable.

An example of polyolefin is ethylene-propylene elastomer (ethylene-propylene rubbers, EPR). It has many end-use applications due to its resistance to weather, good heat aging properties and its ability to be compounded with large quantities of fillers and plasticizers. Typical automotive uses are radiator and heater hoses, vacuum tubing, weather stripping and sponge doorseals. Typical industrial uses are sponge parts, gaskets and seals.

Another group of commonly used olefin-based polymers is cycloolefin copolymers (COC). One of the these is a copolymer of cycloolefin and ethylene, which has excellent transparency. Also, their heat resistance, heat aging resistance, chemical resistance, solvent resistance, dielectric properties and rigidity are well balanced. Therefore, ethylene/cycloolefin copolymers are very suitable for use in the field of optical materials such as optical memory disks and optical fibers.

Ethylene/cycloolefin copolymers are usually prepared in the presence of metallocene/aluminoxane catalyst systems, as described in U.S. Patent No. 5,559,199 (Abe et al.) and No. 5,602,219 (Aulbach et al.) In U.S. Patent No. 5,559,199, metallocenes such as isopropylidene (cyclopentadienylmethylcyclopentadienyl)zirconium dichloride are disclosed. In U.S. Patent No. 5,602,219, metallocenes such as dimethylsilyl-(1-indenyl) - cyclopentadienylzirconium dichloride are disclosed.

However, conventional processes for preparing ethylene-cycloolefin copolymers have some common problems. First, the conversion of the cycloolefin (or the incorporation of the cycloolefin) is too low. Second, the high incorporation of ethylene results in too low a glass transition temperature (Tg) of the copolymer.

To increase the conversion of the cycloolefin, a common technique is to increase the reaction temperature as well as pressure. By this technique the conversions of cycloolefin and ethylene are both increased and thus, the copolymer obtained has a decreased Tg.

### SUMMARY OF THE INVENTION

An object of the present invention is to provide a catalyst composition for preparing olefin polymers, particularly for preparing ethylene/cycloolefin copolymers with a high cycloolefin incorporation and a high Tg.

To achieve the above-mentioned object, the catalyst composition of the present invention catalyst composition for preparing an olefin polymer includes:
(a) a metallocene compound represented by the formula (I) ; 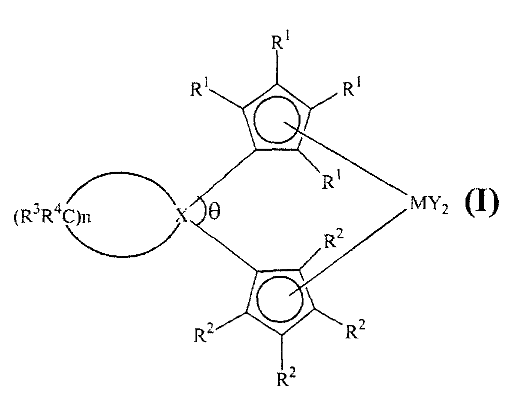 wherein
   R¹ can be the same or different and is selected from the group consisting of hydrogen, halogen, an alkyl, alkenyl, aryl, alkylaryl or arylalkyl group having from 1 to 20 carbon atoms, or two adjacent R¹ groups can join together to form, with the carbon atoms to which they are attached, a saturated or unsaturated ring system having from 4 to 20 carbon atoms;
   R² can be the same or different and has the same definition as R¹;
   X is selected from the IVA group consisting of carbon, silicon, germanium and tin;
   n is from 2 to 12;
   R³ and R⁴ can be the same or different and are selected from the group consisting of hydrogen, halogen, an alkyl, alkenyl, aryl, alkylaryl or arylalkyl group having from 1 to 12 carbon atoms;
   M is a Group IVB transition metal with an oxidation state of +4; and
   Y is the same or different and is independently an anionic ligand with a -1 valence; and
(b) an activating cocatalyst selected from the group consisting of (1) an aluminoxane, (2) a mixture of AlR¹¹R¹²R¹³ and a borate, and (3) a mixture of AlR¹¹R¹²R¹³ and an aluminoxane, wherein R¹¹, R¹², and R¹³ are a C₁₋₂₀ aliphatic group or a C₆₋₁₀ aromatic group.

### DETAILED DESCRIPTION OF THE INVENTION

The present invention provides a catalyst composition for preparing olefin polymers, which includes a metallocene complex represented by formula (I) and an activating cocatalyst.

One aspect of the present invention resides in that X (Group IVA element such as C, Si, Ge, or Sn) in formula (I) is bridged by -(CR³R⁴)ₙ- to form a ring structure.

Referring to the conventional metallocenes for preparing cycloolefin copolymers in U.S. Patent No. 5,559,199 (U.S. '199) and No. 5,602,219 (U.S. '219) as mentioned above, for example, isopropylidene(cyclopentadienylmethylcyclopentadienyl)zirconium dichloride and dimethylsilyl-(1-indenyl)cyclopentadienylzirconium dichloride, it can be seen that two methyl groups are bonded to the carbon or silicon atom of the metallocene. Part of the chemical structure of the metallocene is depicted in the following table for better understanding, in which Cp indicates unsubstituted or substituted cyclopentadienyl, and *θ*_{*1*}*, θ*_{*2*}, and *θ*_{*3*}, indicate the angle formed by Cp, Group IVA element, and another Cp (Cp-IVA-Cp), which is called the bite angle.

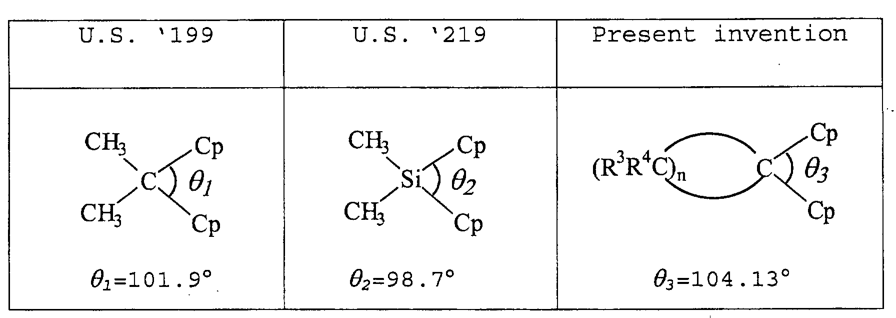

In contrast with the metallocene of U.S '199 and U.S. '219, the Group IVA element such as carbon is bridged by -(CR³R⁴)ₙ- to form a ring structure in the present invention. As a result of this bridging, the angle formed by Cp-IVA-Cp can be enlarged. That is to say, angle θ_{*3*} is larger than both *θ*_{*1*} and θ_{*2*}.

According to the calculation from the formula PM3 (semi-empirical), the bite angle (θ_{*1*}) of isopropylidene(cyclopentadienylmethylcyclopentadienyl) zirconium dichloride used in U.S. Patent No. 5,559,199 is 101.9°, the bite angle (θ_{*2*}) of dimethylsilyl-(1-indenyl)cyclopentadienylzirconium dichloride used in U.S. Patent No. 5,602,219 is 98.7°, and the bite angle (θ_{*3*}) of cyclobutylidene(1-η⁵-cyclopentadienyl) (1-η⁵-indenyl)-bis(dimethylamino)zirconium (see Example 3 below) used in the present invention is 104.13°, which is far larger than *θ*_{*1*} and *θ*_{*2*}. Therefore, theoretically, the metallocene of the present invention is more reactive to a larger monomer (such as cycloolefin). The experimental data of the present invention below comply with this theoretical result.

When a conventional metallocene compound is used as a catalyst to prepare a copolymer of a cycloolefin and an acyclic olefin (such as ethylene), since the bite angle is small, it is difficult for the cycloolefin which has a larger size than ethylene to encounter the metallocene active site. Thus, an undesired low incorporation amount of the cycloolefin occurs in the copolymer produced. However, when the metallocene compound of the present invention is used as the catalyst, the larger bite angle leads to a greater chance of the cycloolefin encountering the metallocene compound. Thus, the incorporation amount of the cycloolefin can be enhanced.

The scientific basis is explained as follows. In a bridged metallocene, when the bite angle between two Cp rings opens up, the active center of the metal moves outward. This will substantially increase ratio of the coordination speed of a cycloolefin to acyclic olefin monomer with the active center of the catalyst compared with other catalysts, which increases the ratio of the cycloolefin relative to acyclic olefin monomer incorporated in the resulted copolymer in turn. The Tg of the copolymer increases accordingly, and the polymerization activity also increases. It should be noted that in a bridged metallocene catalyst, the bite angle resulted from a carbon bridge is obviously larger than that resulted from a silicon bridge. One reason is that the element radius of carbon (0.77 Å) is smaller than that of silicon (1.11 Å). The other reason is that the electronegativity of carbon (2.5) is larger than that of silicon (1.8). This causes carbon-carbon has a far larger bonding energy than silicon-carbon. Therefore, when Cp is bridged with a group IVA element, silicon bridge has a larger degree of deformation than carbon, resulting in a smaller bite angle.

In formula (I), when R¹ and R² are an alkyl, alkenyl, aryl, alkylaryl or arylalkyl group having from 1 to 20 carbon atoms, preferably from 1 to 15 carbon atoms, they are preferably C₁₋₁₀ alkyl, C₁₋₁₀ alkenyl, C₆₋₁₀ aryl, C₇₋₁₀ alkylaryl, and C₇₋₁₀ arylalkyl. Representative examples of R¹ and R² include H, methyl, ethyl, propyl, butyl, isobutyl, amyl, isoamyl, hexyl, 2-ethylhexyl, heptyl, octyl, vinyl, allyl, isopropenyl, phenyl, and tolyl.

When two adjacent R¹ (or R²) groups combine together to form, with the carbon atoms to which they are attached, a ring system having from 4 to 20 carbon atoms, preferably 4 to 6 carbon atoms, R¹ (or R²) can form with the cyclopentadienyl moiety to which they are attached a saturated or unsaturated polycyclic cyclopentadienyl ring such as an indenyl, tetrahydroindenyl, fluorenyl or octahydrofluorenyl group. Representative examples of such rings include η⁵-cyclopentadienyl, η⁵-methylcyclopentadienyl, η⁵-ethylcyclopentadienyl, η⁵-propylcyclopentadienyl, η⁵-tetramethylcyclopentadienyl, η⁵-pentamethylcyclopentadienyl, η⁵-*n*-butylcyclopentadienyl, indenyl, tetrahydroindenyl, fluorenyl, and octahydrofluorenyl.

Y can be H, a C₁₋₂₀ hydrocarbon group, a halogen, C₆₋₂₀ aryl, C₇₋₂₀ alkylaryl or arylalkyl, C₁₋₂₀ alkoxy, C₁₋₂₀ aryloxy, NH₂, NHR⁷, NR⁷R⁸, -(C=O)NH₂, -(C=O)NHR⁹, -(C=O)NR⁹R¹⁰, each of R⁷, R⁸, R⁹ and R¹⁰ being C₁₋₂₀ alkyl. Suitable Y groups include methyl, ethyl, phenyl, chlorine, bromine, methoxy, ethoxy, -NH₂, -NH(CH₃), -N(CH₃)₂, -N(C₂H₅)₂, and -N(C₃H₇)₂.

In the present invention, the metallocene compound represented by formula (I) can be combined with an activating coatalyst to form a catalyst composition which can be used for preparing olefin polymers.

The cocatalyst used in the present invention can be (1) an aluminoxane, (2) a mixture of AlR¹¹R¹²R¹³ and a borate, or (3) a mixture of AlR¹¹R¹²R¹³ and an alumoxane. R¹¹, R¹², and R¹³ are a C₁₋₂₀ aliphatic group or a C₆₋₁₀ aromatic group. A preferred aluminoxane is methyl aluminoxane. Representative examples of AlR¹¹R¹²R¹³ include trimethyl aluminum, triethyl aluminum, tripropyl aluminum, trisopropyl aluminum, tributyl aluminum, and triisobutyl aluminum (TIBA). Representative examples of borates include N,N-dimethyl anilinium tetrakis(pentafluorophenyl)borate, triphenyl carbenium tetrakis(pentafluorophenyl)borate, trimethyl ammonium tetrakis(pentafluorophenyl)borate, ferrocenium tetrakis(pentafluorophenyl)borate, dimethyl ferrocenium tetrakis(pentafluorophenyl)borate, and silver tetrakis(pentafluorophenyl)borate.

By using the catalyst composition of the present invention, an olefin polymer can be synthesized. In the presence of a catalytically effective amount of the catalyst composition of the present invention under polymerizing conditions, an olefin monomer can be subjected to polymerization (homopolymerization), or at least one olefin monomer together with at least one other monomer can be subjected to polymerization (copolymerization).

According to the present invention, a preferred olefin is a cycloolefin. Preferably, the polymerization of the present invention is homopolymerization of a cycloolefin, or copolymerization of a cycloolefin and an acycloolefin.

Cycloolefins suitable for use in the present invention include a bicycloheptene, a tricyclodecene, a tricycloundecene, a tetracyclododecene, a pentacyclopentadecene, a pentacyclopentadecadiene, a pentacyclohexadecene, a hexacycloheptadecene, a heptacycloeicosene, a heptacycloheneicosene, a octacyclodocosene, a nonacyclopentacosene, and a nonacyclohexacosene. Representative examples include norbornene, tetracyclododecene, dicyclopentadiene, and ethylidene norbornene..

Suitable acyclic olefins can be ethylene or α-olefins. Representative examples of α-olefins include those olefins having 3 to 12 carbon atoms, such as propylene, 1-butene, 1-pentene, 1-hexene, and 1-octene.

More particularly, the catalyst composition of the present invention can be advantageously used to prepare acylic olefin/cycloolefin copolymers, such as ethylene/cycloolefin copolymers. By means of the specific catalyst composition, the ethylene/cycloolefin copolymer obtained will have a high cycloolefin conversion and a high Tg.

By means of the specific catalyst composition of the present invention, the olefin polymer resulted has a glass transition temperature ranging from 60-300°C, preferably 120-300°C, and most preferably 250-300°C.

The novel catalyst composition disclosed in the present invention can be used in slurry reactions, gas phase reactions, and solution polymerization reactions. According to the experimental results of the present invention, it can be proved that the specific catalyst composition of the present invention can still has superior activity at a higher reaction temperature. Such superior activity will lead to the increase of the cycloolefin incorporation amount, and the cycloolefin copolymer obtained will have an increased Tg, which can not be achieved by a conventional similar catalyst.

In addition, the present invention provides a novel metallocene catalyst having the structure selected from the following three formulae: 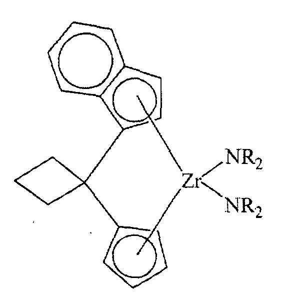 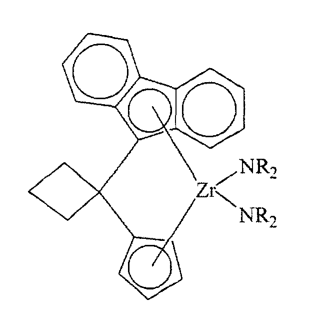 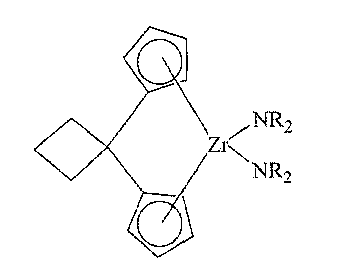 wherein R is C1-C20 hydrocarbyl group.

The following examples are intended to illustrate the process and the advantages of the present invention more fully without limiting its scope, since numerous modifications and variations will be apparent to those skilled in the art. Unless otherwise indicated, all parts, percents, ratios and the like are by weight.

### Synthesis of Metallocene

### Example 1:

### Synthesis of 1-cyclopentadienyl-1-indenylcyclobutane (a bridged cyclopentadiene)

Indene (5.8 g, 50 mmole) was placed in a 250 ml round bottom flask with 50 ml of THF (tetrahydrofuran). 40 ml (1.6 M, 64 mmole) of n-butyl lithium (n-BuLi) was added into the solution under an ice bath. The mixture turned orange red. The ice bath was removed and the mixture was stirred for 3 hours. Then, the reaction mixture was stripped under vacuum to remove solvent, washed with 50 ml of pentane to remove excess n-BuLi, and filtered to collect the precipitate.

The precipitate was dissolved in 50 ml of THF and 6,6-trimethylenefulvene (5.9 g, 50 mmole) was added gradually to the solution under an ice bath. After stirring for 24 hours, 1 ml of water was added to the mixture to terminate the reaction. The reaction mixture was stripped under vacuum to remove solvent, dissolved with 100 ml of hexane, and filtered to collect the filtrate. The crude product (i.e., filtrate) was purified by column chromatography (the packing was 20 g of silica gel, the eluent was 100% hexane). The solution was then concentrated under reduced pressure to obtain a pale yellow liquid (8.2 g, yield=70%).

### Example 2:

### Synthesis of 1-methylcyclopentadienyl-1-indenylcyclobutane

Indene (2.9 g, 25 mmole) was placed in a 250 ml round bottom flask with 30 ml of THF (tetrahydrofuran). 20 ml (1.6 M, 32 mmole) of n-butyl lithium (n-BuLi) was added into the solution under an ice bath. The mixture turned orange red. The ice bath was removed and the mixture was stirred for 3 hours. Then, the reaction mixture was stripped under vacuum to remove solvent, washed with 50 ml of pentane to remove excess n-BuLi, and filtered to collect the precipitate.

The precipitate was dissolved in 30 ml of THF and 3-methyl-6,6-trimethylenefulvene (3.3 g, 25 mmole) was added gradually to the solution under an ice bath. After stirring for 24 hours, 1 ml of water was added to the mixture to terminate the reaction. The reaction mixture was stripped under vacuum to remove solvent, dissolved with 50 ml of hexane, and filtered to collect the filtrate. The crude product (i.e., filtrate) was purified by column chromatography (the packing was 20 g of silica gel, the eluent was 100% hexane). The solution was then concentrated under reduced pressure to obtain a pale yellow liquid (4.7 g, yield=75.8%).

### Example 3:

### Synthesis of cyclobutylidene(1-η⁵-cyclopentadienyl) (1-η⁵-indenyl)bis(dimethylamino)zirconium

1-Cyclopentadienyl-1-indenylcyclobutane (0.94 g, 4 mmole) obtained as in Example 1 and Zr(NMe₂)₄ (1 g, 3.7 mmole) were placed in a 100 ml round bottle flask. 20 ml of toluene was added to the flask and the mixture was allowed to react at room temperature for 15 hours. The reaction mixture was stripped under vacuum to remove solvent and then 50 ml of pentane was added to dissolve the residue. The solution was filtered and the filtrate was then concentrated to obtain a yellow solid (1.45 g, yield=95%) .

### Example 4:

### Synthesis of cyclobutylidene(1-η⁵-methylcyclopentadienyl) (1-η⁵-indenyl)bis(dimethylamino)zirconium}

1-Methylcyclopentadienyl-1-indenylcyclobutane (0.99 g, 4 mmole) obtained as in Example 2 and Zr(NMe₂)₄ (1 g, 3.7 mmole) were placed in a 100 ml round bottle flask. 20 ml of toluene was added to the flask and the mixture was allowed to react at room temperature for 15 hours. The reaction mixture was stripped under vacuum to remove solvent and then 50 ml of pentane was added to dissolve the residue. The solution was filtered and the filtrate was then concentrated to obtain a yellow solid (1.54 g, yield=98%).

### Polymer Synthesis

### Example A:

### Synthesis of ethylene/norbornene copolymer

Toluene was refluxed in the presence of sodium to remove water to a water content of less than 10 ppm. 500 g of norbornene and 88 g of dry toluene were mixed under nitrogen to obtain a 85 wt% norbornene solution.

A 500 ml reactor vessel was heated to 105°C, evacuated for 1 hour, and then purged with nitrogen gas three or four times to ensure complete removal of moisture and oxygen. The reactor temperature was adjusted to 100°C. After the temperature was stabilized, 100 g of the 85 wt% norbornene solution was charged in the reactor under a nitrogen atmosphere and the solution was stirred at a rate of 250 rpm while 4 ml of 1.49 M MAO (methyl aluminoxane) was injected into the reactor by a syringe.

Then, ethylene was introduced into the reactor to replace nitrogen and expelled. The procedure was repeated again. Finally, ethylene at a pressure of 15 kg/cm² was introduced into the reactor to a saturation level in the solution. 1 mg of the metallocene complex obtained as in Example 3 was dissolved in 1 ml of toluene in a glove box. Then, 3 ml of MAO was added in the metallocene solution for activation. After five minutes of activation, the metallocene solution was then injected into the reactor to initiate polymerization and the mixture was stirred at a rate of 500 rpm. The reaction proceeded for 30 minutes.

After the completion of the polymerization reaction, the reaction solution was poured into an acetone solution containing dilute hydrochloric acid to precipitate the product. The product was washed with acetone twice or three times, filtered, dried in vacuum oven at 80°C for 12 hours. The obtained copolymer was 43.2 g. The results for this example are shown in Table 1.

### Examples B to F

The same procedures as described in Example A were repeated to prepare various cycloolefin copolymers except that the reaction temperature, the metallocene amount, and the MAO amount were changed. The metallocene used in Examples A to F was the same. The results obtained are shown in Table 1.

**Table 1**

| Example | Metallocene Complex (mg) | MAO (ml) | Reaction Temperature (°C) | ethylene pressure (kg/cm²) | Yield (g) | Activity (g/gZr.hr) | Tg (°C) |
|---|---|---|---|---|---|---|---|
| A | 1 | 7 | 100 | 15 | 43.2 | 3.9×10⁵ | 173 |
| B | 0.24 | 1.3 | 80 | 15 | 10.9 | 2.07×10⁵ | 163 |
| C | 0.23 | 1.3 | 100 | 15 | 15.3 | 5.90×10⁵ | 176 |
| D | 0.22 | 1.3 | 120 | 15 | 20.4 | 8.23×10⁵ | 185 |
| E | 0.23 | 1.3 | 140 | 15 | 26.4 | 10.2×10⁵ | 195 |
| F | 0.24 | 1.3 | 155 | 15 | 11.1 | 4.22×10⁵ | 193 |

### Examples G (compared with Example A)

Toluene was refluxed in the presence of sodium to remove water to a water content of less than 10 ppm. 500 g of norbornene and 88 g of dry toluene were mixed under nitrogen to obtain a 85 wt% norbornene solution.

A 500 ml reactor vessel was heated to 105°C, evacuated for 1 hour, and then purged with nitrogen gas three or four times to ensure complete removal of moisture and oxygen. The reactor temperature was adjusted to 100°C. After the temperature was stabilized, 100 g of the 85 wt% norbornene solution was charged in the reactor under a nitrogen atmosphere and the solution was stirred at a rate of 250 rpm. Then, 4 ml of 1.49 M MAO (methyl aluminoxane) was injected into the reactor by a syringe and stirred.

Then, ethylene was introduced into the reactor to replace nitrogen and expelled. The procedure was repeated again. Finally, ethylene at a pressure of 15 kg/cm² was introduced into the reactor to a saturation level in the solution. 1 mg of diphenylmethylidene(cyclopentadienyl) (9-fuorenyl) zirconium dichloride was dissolved in 1 ml of toluene in a glove box. Then, 3 ml of MAO was added in the metallocene solution for activation. After five minutes of activation, the metallocene solution was then injected into the reactor to initiate polymerization and the mixture was stirred at a rate of 500 rpm. The reaction proceeded for 30 minutes.

After the completion of the polymerization reaction, the reaction solution was poured into an acetone solution containing dilute hydrochloric acid to precipitate the product. The product was washed with acetone two or three times, filtered, dried in a vacuum oven at 80°C for 12 hours. The obtained copolymer was 26.9 g. The results obtained are shown in Table 2.

### Example H (compared with Example E)

The same procedures as described in Example G were repeated to prepare a cycloolefin copolymer except that the reaction temperature was changed. The metallocene used in Examples G and H was the same. The results obtained are shown in Table 2.

**Table 2**

| Example | Metallocene Complex (mg) | MAO (ml) | Reaction Temperature (°C) | ethylene pressure (kg/cm²) | Yield (g) | Activity (g/gZr.hr) | Tg (°C) |
|---|---|---|---|---|---|---|---|
| G | 1.00 | 7 | 100 | 15 | 26.9 | 3.28×10⁵ | 172 |
| H | 1.00 | 7 | 140 | 15 | 14.4 | 1.76×10⁵ | 178 |

### Examples I to K

The same procedures as described in Example A were repeated to prepare various cycloolefin copolymer having a high Tg except that the reaction temperature was set to 120°C, the reaction time was lengthened to 1 hour, the ethylene pressure was changed, and the amounts of metallocene and MAO were changed. The metallocene used in Examples I to K was the same as that used in Example A. The results obtained are shown in Table 3.

**Table 3**

| Example | Metallocene Complex (mg) | MAO (ml) | Reaction Temperature (°C) | ethylene pressure (kg/cm²) | Yield (g) | Activity (g/gZr.hr) | Tg (°C) |
|---|---|---|---|---|---|---|---|
| I | 1.05 | 1.3 | 120 | 3 | 27.4 | 1.17×10⁵ | 292 |
| J | 0.52 | 1.3 | 120 | 5 | 24.4 | 2.14×10⁵ | 245 |
| K | 0.55 | 1.3 | 120 | 7 | 34.9 | 2.87×10⁵ | 232 |

### Examples L (compared with Example J)

Toluene was refluxed in the presence of sodium to remove water to a water content of less than 10 ppm. 500 g of norbornene and 88 g of dry toluene were mixed under nitrogen to obtain a 85 wt% norbornene solution.

A 500 ml reactor vessel was heated to 105°C, evacuated for 1 hour, and then purged with nitrogen gas three or four times to ensure complete removal of moisture and oxygen. The reactor temperature was adjusted to 100°C. After the temperature was stabilized, 100 g of the 85 wt% norbornene solution was charged in the reactor under a nitrogen atmosphere and the solution was stirred at a rate of 250 rpm. Then, 4 ml of 1.49 M MAO (methyl aluminoxane) was injected into the reactor by a syringe and stirred.

Then, ethylene was introduced into the reactor to replace nitrogen and expelled. The procedure was repeated again. Finally, ethylene at a pressure of 5 kg/cm² was introduced into the reactor to a saturation level in the solution. 1 mg of diphenylmethylidene(cyclopentadienyl) (9-fuorenyl) zirconium dichloride was dissolved in 1 ml of toluene in a glove box. Then, 3 ml of MAO was added in the metallocene solution for activation. After five minutes of activation, the metallocene solution was then injected into the reactor to initiate polymerization and the mixture was stirred at a rate of 500 rpm. The reaction proceeded for 60 minutes.

After the completion of the polymerization reaction, the reaction solution was poured into an acetone solution containing dilute hydrochloric acid to precipitate the product. The product was washed with acetone two or three times, filtered, dried in a vacuum oven at 80°C for 12 hours. The obtained copolymer was 15.3 g. The results obtained are shown in Table 4.

**Table 4**

| Example | Metallocene Complex (mg) | MAO (ml) | Reaction Temperature (°C) | ethylene pressure (kg/cm²) | Yield (g) | Activity (g/gZr.hr) | Tg (°C) |
|---|---|---|---|---|---|---|---|
| L | 1.00 | 7 | 120 | 5 | 15.3 | 9.37×10⁴ | 199 |

### Examples M to O

The same procedures as described in Example A were repeated to prepare various cycloolefin copolymers except that the reaction temperature was set to 120°C, ethylene pressure was changed, and the amounts of metallocene and MAO were changed. The metallocene used in Examples M to O was the same as that used in Example A. The results obtained are shown in Table 5.

**Table 5**

| Example | Metallocene Complex (mg) | MAO (ml) | Reaction Temperature (°C) | ethylene pressure (kg/cm²) | Yield (g) | Activity (g/gZr.hr) | Tg (°C) |
|---|---|---|---|---|---|---|---|
| M | 0.22 | 1.3 | 120 | 15 | 20.4 | 8.23×10⁵ | 185 |
| N | 0.49 | 3.4 | 120 | 30 | 59.0 | 10.9×10⁵ | 147 |
| O | 0.47 | 3.4 | 120 | 60 | 52.5 | 10.0×10⁵ | 105 |

### Examples P to S

The same procedures as described in Example A were repeated to prepare various cycloolefin copolymers except that the reaction temperature, ethylene pressure, and the amounts of metallocene and MAO were changed. The metallocene used in Examples P to S was the same as that used in Example A. The norbornene used had difference concentrations in theses examples. The results obtained are shown in Table 6.

**Table 6**

| Example | Metallocene Complex (mg) | MAO (ml) | norbornene concentration (%) | Reaction Temperature (°C) | ethylene pressure (kg/cm²) | Yield (g) | Activity (g/gZr.hr) | Tg (°C) |
|---|---|---|---|---|---|---|---|---|
| P | 0.23 | 1.3 | 85 | 15 | 120 | 28.5 | 5.50×10⁵ | 183 |
| Q | 0.22 | 1.3 | 50 | 15 | 120 | 30.8 | 12.4×10⁵ | 156 |
| R | 0.46 | 5.2 | 85 | 60 | 100 | 70.6 | 1.36×10⁵ | 103 |
| S | 0.47 | 5.2 | 50 | 60 | 100 | 33.0 | 6.30×10⁵ | 66 |

### Example T

Toluene was refluxed in the presence of sodium to remove water to a water content of less than 10 ppm. 500 g of norbornene and 88 g of dry toluene were mixed under nitrogen to obtain a 85 wt% norbornene solution.

A 500 ml reactor vessel was heated to 105°C, evacuated for 1 hour, and then purged with nitrogen gas three or four times to ensure complete removal of moisture and oxygen. The reactor temperature was adjusted to 100°C. After the temperature was stabilized, 100 g of the 85 wt% norbornene solution was charged in the reactor under a nitrogen atmosphere and the solution was stirred at a rate of 250 rpm. Then, 4 ml of 1.49 M MAO (methyl aluminoxane) was injected into the reactor by a syringe and stirred.

Then, ethylene was introduced into the reactor to replace nitrogen and expelled. The procedure was repeated again. Finally, ethylene at a pressure of 15 kg/cm² was introduced into the reactor to a saturation level in the solution. 1 mg of the metallocene complex obtained as in Example 4 was dissolved in 1 ml of toluene in a glove box. Then, 3 ml of MAO was added in the metallocene solution for activation. After five minutes of activation, the metallocene solution was then injected into the reactor to initiate polymerization and the mixture was stirred at a rate of 500 rpm. The reaction proceeded for 30 minutes.

After the completion of the polymerization reaction, the reaction solution was poured into an acetone solution containing dilute hydrochloric acid to precipitate the product. The product was washed with acetone two or three times, filtered, dried in a vacuum oven at 80°C for 12 hours. The obtained copolymer was 27.9 g. The results obtained are shown in Table 7.

**Table 7**

| Example | Metallocene Complex (mg) | MAO (ml) | Reaction Temperature (°C) | ethylene pressure (kg/cm²) | Yield (g) | Activity (g/gZr.hr) | Tg (°C) |
|---|---|---|---|---|---|---|---|
| T | 1.00 | 7 | 100 | 15 | 27.9 | 2.6×10⁵ | 161 |

The foregoing description of the preferred embodiments of this invention has been presented for purposes of illustration and description. Obvious modifications or variations are possible in light of the above teaching. The embodiments chosen and described provide an excellent illustration of the principles of this invention and its practical application to thereby enable those skilled in the art to utilize the invention in various embodiments and with various modifications as are suited to the particular use contemplated. All such modifications and variations are within the scope of the present invention as determined by the appended claims when interpreted in accordance with the breadth to which they are fairly, legally, and equitably entitled.

## Claims

1. A catalyst composition for preparing an olefin polymer, comprising:
(a) a metallocene compound represented by the formula (I); 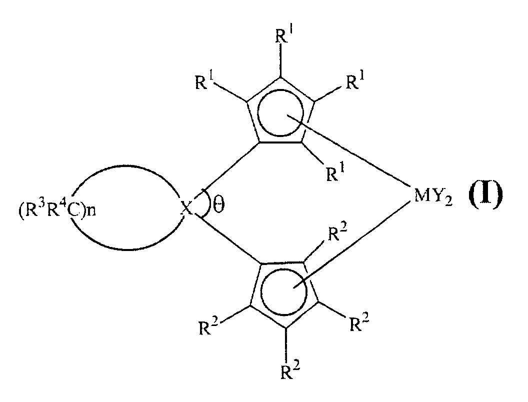 wherein
R¹ can be the same or different and is selected from the group consisting of hydrogen, halogen, an alkyl, alkenyl, aryl, alkylaryl or arylalkyl group having from 1 to 20 carbon atoms, or two adjacent R¹ groups can join together to form, with the carbon atoms to which they are attached, a saturated or unsaturated ring system having from 4 to 20 carbon atoms;
R² can be the same or different and has the same definition as R¹;
X is selected from the group consisting of carbon, silicon, germanium and tin;
n is from 2 to 12;
R³ and R⁴ can be the same or different and are selected from the group consisting of hydrogen, halogen, an alkyl, alkenyl, aryl, alkylaryl or arylalkyl group having from 1 to 12 carbon atoms;
M is a Group IVB transition metal with an oxidation state of +4; and
Y is the same or different and is independently an anionic ligand with a -1 valence; and
(b) an activating cocatalyst selected from the group consisting of (1) an aluminoxane, (2) a mixture of AlR¹¹R¹²R¹³ and a borate, and (3) a mixture of AlR¹¹R¹²R¹³ and an aluminoxane, wherein R¹¹, R¹², and R¹³ are a C₁₋₂₀ aliphatic group or a C₆₋₁₀ aromatic group.

2. The catalyst composition as claimed in claim 1, wherein R¹ and R² are each selected from the group consisting of H, C₁₋₁₀ alkyl, C₁₋₁₀ alkenyl, C₆₋₁₀ aryl, C₇₋₁₀ alkylaryl, and C₇₋₁₀ arylalkyl.

3. The catalyst composition as claimed in claim 2, wherein R¹ and R² are each selected from the group consisting of H, methyl, ethyl, propyl, butyl, isobutyl, amyl, isoamyl, hexyl, 2-ethylhexyl, heptyl, octyl, vinyl, allyl, isopropenyl, phenyl, and tolyl.

4. The catalyst composition as claimed in claim 1, wherein two adjacent R¹ groups are joined together to form, with the carbon atoms to which they are attached, a saturated or unsaturated ring system having from 4 to 20 carbon atoms.

5. The catalyst composition as claimed in claim 4, wherein two adjacent R¹ groups are joined together to form with the cyclopentadienyl moiety to which they are attached a saturated or unsaturated polycyclic cyclopentadienyl ligand.

6. The catalyst composition as claimed in claim 5, wherein two adjacent R¹ groups are joined together to form with the cyclopentadienyl moiety to which they are attached an indenyl, tetrahydroindenyl, fluorenyl or octahydrofluorenyl group.

7. The catalyst composition as claimed in claim 1, wherein two adjacent R² groups are joined together to form with the carbon atoms to which they are attached a saturated or unsaturated ring system having from 4 to 20 carbon atoms.

8. The catalyst composition as claimed in claim 7, wherein two adjacent R² groups are joined together to form with the cyclopentadienyl moiety to which they are attached a saturated or unsaturated polycyclic cyclopentadienyl ligand.

9. The catalyst composition as claimed in claim 8, wherein two adjacent R² groups are joinged together with the cyclopentadienyl moiety to which they are attached an indenyl, tetrahydroindenyl, fluorenyl or octahydrofluorenyl group.

10. The catalyst composition as claimed in claim 1, wherein X is carbon.

11. The catalyst composition as claimed in claim 1, wherein Y is selected from the group consisting of H, a C₁₋₂₀ hydrocarbon group, a halogen, a C₆₋₂₀ aryl group, a C₇₋₂₀ arylalkyl group or alkylaryl group, a C₁₋₂₀ alkoxy group, a C₁₋₂₀ aryloxy group, -NH₂, -NHR⁷,-NR⁷R⁸, -(C=O)NH₂, - (C=O)NHR⁹, and -(C=O)NR⁹R¹⁰, and each of R , R⁸, R⁹ and R¹⁰ is a C₁₋₂₀ alkyl group.

12. The catalyst composition as in claim 1, wherein Y is -N(CH₃)₂.

13. A process for preparing an olefin polymer, comprising the step of:
polymerizing (a) an olefin, or (b) at least one olefin with at least one other monomer,
under polymerizing conditions in the presence of a catalytically effective amount of the catalyst composition as claimed in claim 1.

14. The process as claimed in claim 13, wherein the process comprises polymerizing (a) an olefin, and the olefin is a cycloolefin.

15. The process as claimed in claim 13, wherein the process comprises polymerizing (b) at least one olefin with at least one other monomer, and wherein the olefin is a cycloolefin and the other monomer is an acyclic olefin.

16. The process as claimed in claim 15, wherein the cycloolefin is selected from the group consisting of a bicycloheptene, a tricyclodecene, a tricycloundecene, a tetracyclododecene, a pentacyclopentadecene, a pentacyclopentadecadiene, a pentacyclohexadecene, a hexacycloheptadecene, a heptacycloeicosene, a heptacycloheneicosene, a octacyclodocosene, a nonacyclopentacosene, and a nonacyclohexacosene.

17. The process as claimed in claim 15, wherein the acyclic olefin is ethylene or an α-olefin having 3 to 12 carbon atoms.

18. The process as claimed in claim 17, wherein the α-olefin is selected from the group consisting of propylene, 1-butene, 1-pentene, 1-hexene, and 1-octene.

19. The process as claimed in claim 15, wherein the process comprises polymerizing (b) a cycloolefin with an acyclic olefin, and wherein the cycloolefin is norbornene and the acyclic olefin is ethylene.

20. The process as claimed in claim 15, wherein the olefin polymer resulted has a glass transition temperature ranging from 60-300°C.

21. The process as claimed in claim 15, wherein the olefin polymer results has a glass transition temperature ranging from 120-300°C.

22. The process as claimed in claim 15, wherein the olefin polymer results has a glass transition temperature ranging from 250-300°C.

23. A metallocene catalyst having the structure 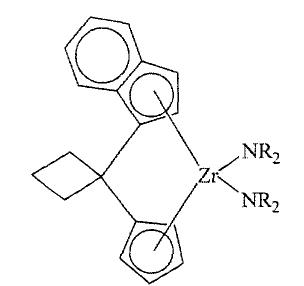 wherein, R is C1-C20 hydrocarbyl group.

24. A metallocene catalyst having the structure 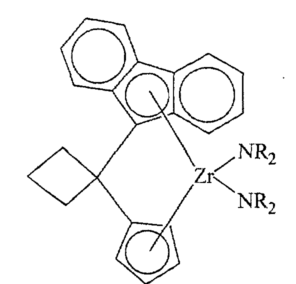 wherein, R is C1-C20 hydrocarbyl group.

25. A metallocene catalyst having the structure 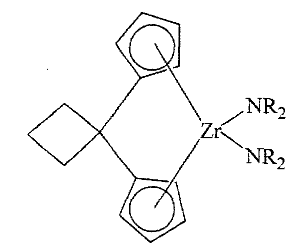 wherein, R is C1-C20 hydrocarbyl group.
